# EUROPEAN PATENT APPLICATION

(11) **EP 2 709 048 A1**
(43) Date of publication of application: **19.03.2014**
(21) Application number: 12425169.5
(22) Date of filing: 15.10.2012
(51) Int. Cl.: G06Q 20/00

(54) **System for furnishing in real time technical information, relative to the content of chemical substances regulated by rules of the European Union, of a product put on a commercial distribution network**

(30) Priority: 13.09.2012 IT FI20120180
(71) Applicant: Scibilia, Gabriele, 56021 Cascina (PI) (IT)
(72) Inventor: Scibilia, Gabriele, 56021 Cascina (PI) (IT)
(74) Representative: Emmi, Mario

(57) **Abstract**

The present invention concerns a method for obtaining an information sheet relative to a product (2) and comprising the operations of:
- Generation of one or more QR CODES (1), each QR CODE (1) being associated to an information sheet relative to a product (2);
- Application of each QR Code to the product (2);
- Arrangement of a central server (10) accessible through the Internet and comprising a file (11) containing the information sheets associated to the QR CODES generated;
- And wherein the reading of the QR Code is foreseen through a reading device (3) in such a way that the decoding of the QR Code read generates a connection via Internet with the central server (10) and the sending via Internet of the corresponding information sheet.

## Description

### Technical field

The present invention refers to the technical field relative to the management and supply of all the technical information relative to a product when it is put on a supply or commercial chain.

In particular, the invention refers to an innovative method, and relative system, which allows, in real time, to have access to said technical information that specifies the features of one or more of the products in question, in particular way in the case of products of chemical nature, through the use of QR Code technology.

### Background art

There exist various regulations, such as Regulation (EC) No. 1907/2006 of the European Parliament and of the Council of 18 December 2006 (called REACh), as subsequently amended, which regulates the manufacturing, import, use, put on the market and transport of products and that, with different criteria and modalities, require an explicit description of eventual hazardous substances that can be present in a product. Other examples of laws, as modified and therefore in their updated version, are Regulation (EC) No. 1272/2008 of the European Parliament and of the Council of 16 December 2008 (called CLP), Directive 2011/65/UE of the European Parliament and of the Council of 8 June 2011 (called RoHS II), Regulation (CE) No. 305/2011 of the European Parliament and of the Council of 9 March 2011, Directive 2008/98/CE of the European Parliament and of the Council of 19 November 2008, Regulation (CE) No. 726/2004 of 31 March 2004, Directive 2001/82/CE of the European Parliament and of the Council of 6 November 2001, Directive 2001/83/CE of the European Parliament and of the Council of 6 November 2001, Regulation (CE) No. 178/2002 of 28 January 2002, Directive 76/768/CEE of 27 July 1976, Directive 93/42/CEE of 14 June 1993 or the Agreement ADR, Regulation No. 648/2004 of the European Parliament and of the Council of 31 March 2004, the regulations for the transport of hazardous merchandise by road (ADR), by rail (RID), by inland waterway (ADN), by sea (IMDG Code) and by air (Technical instruction ICAO). Basically, who puts on the market of the European Union products in general, and in particular way substances or mixtures that can contain hazardous chemical substances, has the obligation to supply the addressee an information sheet related to safety that contains a consistent series of technical data relative to the product in question, therefore composition, hazardousness of the components, anti-fire measures, stability and reactivity, toxicological information, first-aid measures, etc.

In theory, any product present in the market should have a certain traceability and therefore an associated technical sheet, responding to a standard model if provided for by the applicable norm, and that supplies the indications on the hazardous substances contained (generally composition and hazardousness) or anyway regulated by norms in force in the European Union. As a way of example, in the case of hazardous chemical substances and mixtures, the manufacturer, importer or distributor has to supply the professional or industrial user (addressee) with a safety data sheet, whose format is standardized, written in conformity with the rules in force before and after the supply of the product in question. Always as a way of example, the supplier of an article, containing at least one extremely worrying substance (SVHC as per the English acronym) as defined in Art. 59 of Regulation No. 1907/2006 and subsequent amendments, has to provide the addressee of the article with information, in the possession of the supplier, sufficient to allow the safety of use of the article and comprising, at least, the name of the substance.

Nevertheless, the sending of the information indicated above, under the form of a sheet or other, can be delayed because of unavailability of the technical document, because of bad management of the sendings, because of lack of staff dedicated to such an activity, etc., determining the possible administrative fine to the subject responsible for putting in the market or even worse, in the case of injury of the user lacking a safety data sheet, the application of measures of penal nature due to fault or willful misconduct in the lacking provision of the document.

Moreover, at the current state of the art, for a purchaser in general it is really difficult to have at the moment the availability of technical information relative to eventual hazardous substances present in the product itself, even if these, apart from being obligatory, could anyway result necessary to guarantee the safety of the purchaser.

### Disclosure of invention

It is therefore the aim of the present invention to provide an innovative method to obtain an efficient and quick access to all the obligatory information or information to transmit on request of a natural or legal person, included private citizens, professional or industrial users, etc., according to the criteria explained in the rules in force in the European Union.

These and other aims are obtained with the present method for obtaining an information sheet relative to a product (2) as per claim 1.

In accordance with the invention, the method comprises the operations of:
- Generation of one or more QR CODES (1), each QR CODE (1) being associated to an information sheet relative to a product (2);
- Application of each QR Code to the product (2);
- Arrangement of a central server (10) accessible through the Internet and comprising a file (11) containing the information sheets associated to the QR CODE generated;
- And wherein the reading of the QR Code is foreseen through a reading device (3) in such a way that the decoding of the QR Code read generates a connection via Internet with the central server (10) and the sending via Internet of the corresponding information sheet.

In this way, all the technical problems mentioned are solved. In particular, at each moment, the user concerned can now download in "Real Time" all the sheets of his interest, speeding up the process of acquisition of them.

Advantageously, the reading device (3) can be selected at choice between:
- Smartphone;
- PC;
- I-phone.

Advantageously, the sending of the information sheet takes place in electronic format directly on the reading device (3).

Advantageously, the decoding of the QR Code determines an electronic address that gives access via Internet directly to the information sheet loaded in the file (11) of the central server (10).

Advantageously, the application of the QR code is made on products of chemical nature.

Advantageously, following the operations of sending of the information sheet requested an operation of timestamping is foreseen.

This solution is important since it allows the memorization, as by law enacted, of the sending of the information sheet. The trace that, as by law enacted, the document has been provided to the applicant remains memorized and available.

Advantageously, the operation of timestamping foresees the creation of a file associated to the information sheet requested and comprising at least one of the following data:
- User ID of the authorised user;
- The date and time of the operation;
- The code of the document concerned in the operation of reading or download;
- The type of event;

It is also here described the use of a QR Code for obtaining via Internet an information sheet of the product on which it is applied.

### Brief description of drawings

Further features and advantages of the present method will result clearer from the description of some embodiments that follows, made to illustrate but not to limit, with reference to the annexed drawings, wherein:
- Figure 1 shows a generic product 2 on which a QR CODE 1 is applied;
- Figure 2 shows the acquisition phase of an image of the QR CODE with a palmtop 3 and the decoding of the code with specific software installed in the palmtop;
- Figure 3 shows, in accordance with the invention, the connection to a central server 10 provided with database 11 containing the technical sheets of the products which are associated univocally to each QR CODE;
- Figure 4 shows the association between each QR CODE and the technical sheet of the product which can contain, for example, technical information relative to chemical substances, for example hazardous chemical substances or regulated by rules in force in the European Union, contained in the product.

### Description of some preferred embodiments

The present invention consists in an innovative system for supplying in real time, through a supply chain, of technical information on the content of chemical substances regulated by rules of the European Union and on the safety of use of the materials, as well as technical information on the specifications of the containers used for the transport of such materials or products.

The innovative system of information is based on the QR Code (*Quick Read Code*), a bi-dimensional bar code composed of black modules arranged inside a square scheme.

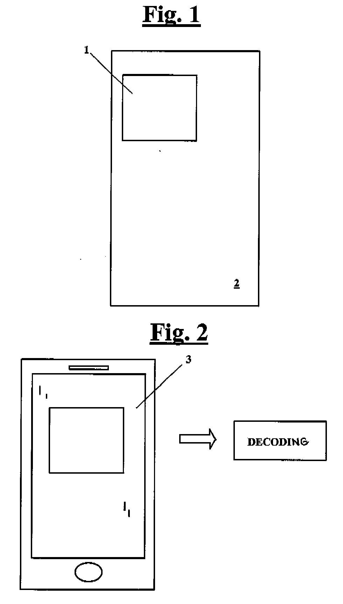

Figure 1 schematizes a QR Code 1 which is applied on a generic product 2. The QR code, also called bi-dimensional bar code or QR code, is already well known in the state of the art. Unlike the ordinary bar code it allows to memorize inside it a big quantity of information. To extract or read the information contained in the QR CODE a palmtop, a mobile phone or other device capable of codifying the code provided with idoneous software is necessary. Said software are already of free domain and widely available on the Internet. Figure 2 shows an example of palmtop (for example an I-Phone) that acquires the image of the QR Code and decodes it.

The present invention takes advantage of this technology by applying the QR code on packages containing the materials (substances, mixtures, solutions, objects, articles, refuses, etc.), or on labels, documents, confections, etc. relative to the materials indicated above, and for which the provision to the addressee of the product with a technical sheet or anyway with an assembly of technical information is requested. The particular QR Code, placed on a package containing any product, for example, allows the display of the information concerning the hazardous substances or regulated by rules in force in the European Union. The information can therefore be displayed on any smartphone provided with a QR Code reader or on a pc or tablet through an appropriate reading application software (many readers are downloadable for free from the Internet). Such information is linked univocally to an address on the Internet that refers to the web server 10.

The decoded QR Code is therefore translated in an Internet address of a web page where the information requested are lodged and correspond to the specific QR Code read.

In particular, a first acquisition phase is foreseen of the information concerning the hazardous substances, or regulated by rules in force in the European Union, contained in the product/s in question (substance, mixture, solution, object, article, refuse, etc.) under the form of standardized documents provided for by the applicable norm in the European Union (for example, safety data sheet of 16 sections) or of documents of free writing.

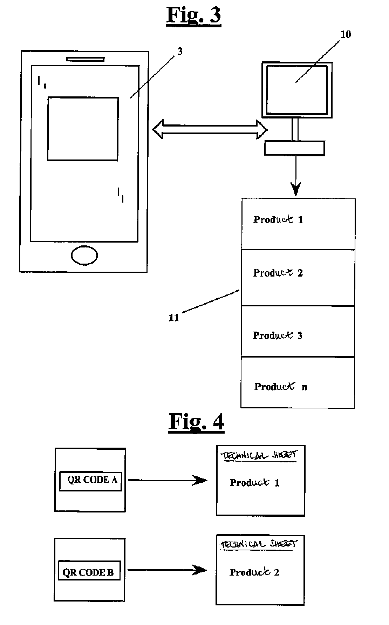

Such information, as shown in figure 3, is loaded on a web server 10 (called, for simplicity purposes in the present description, central server 10) that contains a database 11 (also called archive 11) of the information on the materials.

The file is managed by a software (web platform) for the insertion/amendment of the information or for the exclusive reading thereof.

Basically, as schematically described in figure 3, the web server 10 is accessible through an ordinary Internet connection and contains inside it an archive 11 containing (obviously in downloadable electronic format) all the documents that can be subsequently added in the file itself.

To that aim, always figure 3 schematizes the central server 10 and, with the double arrow, the connection from the server to the palmtop 3 and vice-versa through the Internet, and obviously the QR Code.

A QR Code is therefore generated, which is linked univocally to a web page, which is lodged in the database 11 placed on the web server 10, and that characterizes the type of product and the company that puts it on the market or that transports it.

At this point, always as shown in figure 3, the palmtop 3 acquires the image of the QR code and the code is decoded. The decoding actually creates an Internet connection, through the Internet, directly to the web server 10 and therefore to the specific product present in the archive 11 and to which the QR Code has been associated. In this way, there is direct access to the web server and therefore to the information arranged in the database 11.

The palmtop will display and download directly the sheet of interest, thus allowing in real time to obtain the necessary information and simplifying significantly all the bureaucratic proceedings currently existing.

Figure 4 in fact shows how, for each QR Code generated, is associated a specific technical sheet of the product which is loaded in the archive 11. In particular, each QR code is associated to the electronic address that refers to the specific product in the archive 11.

In this way, each user, in a quick and simple way, has immediately access to all the information of his interest directly in his palmtop.

Advantageously, it is possible to eventually foresee a specific user ID and password for the reading of the web page related to the QR code. In this way, the addressee or addressees, for example professional or industrial users, can be authorised to the reading of the information foreseeing a specific user ID and password of access to the web page that contains the information. In other cases, for example for materials destined to the private sector, a "public" QR Code for free reading without protection can be foreseen.

A further implementation foresees the registration of the reading or of the download of the document concerning the product.

In particular, such a registration can take place when a User ID and password for the addressee, or the addressees, is foreseen, for tracing the type of product, the user authorised to the reading or download, the date and time of the operation and the type of operation (reading or download).

In this way, there is the advantage of creating an archive of the readings or of the down-load made.

In particular, it is very important, for the purposes of the present technical problem set, to have memory of the provision of the document when it has been downloaded by a user in such a way that such a registration of the "download" has value in accordance with the law.

To that aim, the web platform will maintain trace of the operations executed and will be able to "certify" the actual reading/download of the document through the application of a timestamp to a file that will be generated by the application itself for each operation executed on a single document. Such a file, once generated, will not be amendable anymore so as to guarantee that the information contained in it remains unaltered.

Such a file will preferably contain the following information:
- User ID of the authorised user;
- The data and time of the operation (reading or download);
- The code of the document concerned for the reading or download operation;
- The type of event (reading, download, error, etc.);

Obviously, the possibility to obtain, on request, the timestamped files containing the operations executed on the documents has to be guaranteed.

The server that will host the web platform will be synchronized continuously, through NTP protocol, in terms of date and time with the Galileo Institute of Turin, recognized as Time Server certified.

In this way, there will be a trace as by law enacted of the provision of the document requested.

## Claims

1. A method for obtaining an electronic information sheet relative to a product (2) and comprising the operations of:
- Generation of one or more QR CODES (1), each QR CODE (1) being associated to an information sheet relative to a product (2);
- Application of each QR Code to the product (2);
- Arrangement of a central server (10) accessible through the Internet and comprising an archive (11) containing the information sheets associated to the QR CODES generated;
- And wherein the reading of the QR Code is foreseen through a reading device (3) in such a way that the decoding of the QR Code read generates a connection via Internet with the central server (10) and the sending via Internet of the corresponding information sheet.

2. A method, as per claim 2, wherein the reading device (3) is selected at choice between:
- Smartphone;
- PC;
- I-phone.

3. A method, as per claim 1 or 2, wherein the sending of the information sheet takes place in electronic format directly on the reading device (3).

4. A method, as per one or more of the preceding claims, wherein the decoding of the QR Code determines an electronic address that gives access via Internet directly to the information sheet loaded in the file (11) of the central server (10).

5. A method, as per one or more of the preceding claims, wherein the application of the QR code is made on products of chemical nature.

6. A method, as per one or more of the preceding claims, wherein following the operations of sending of the information sheet requested an operation of timestamping is foreseen.

7. A method, as per one or more of the preceding claims, wherein said operation of timestamping foresees the creation of a file associated to the information sheet requested and comprising at least one of the following data:
- User ID of the authorised user;
- The date and time of the operation;
- The code of the document concerned in the operation of reading or download;
- The type of event;

8. The use of a QR Code for obtaining via Internet an information sheet of the product on which it is applied.

## Amended claims

### Amended claims in accordance with Rule 137(2) EPC.

**1.** A method for obtaining an electronic information sheet relative to a product (2) and comprising the operations of:
- Generation of one or more QR CODES (1), each QR CODE (1) being associated to an electronic information sheet relative to a product (2);
- Application of each QR Code to the product (2), the product being of chemical nature;
- Arrangement of a central server (10) accessible through the Internet and comprising an archive (11) containing the electronic information sheets associated to the QR CODES generated;
- And wherein the reading of the QR Code is foreseen through a reading device (3) in such a way that the decoding of the QR Code read generates a connection via Internet with the central server (10) and the sending via Internet of the corresponding electronic information sheet;
**Characterized in that** the introduction of a specific user ID and password is foreseen for allowing the reading of the web page related to the QR code.

**2.** A method, as per claim 1, wherein the reading device (3) is selected at choice between:
- Smartphone;
- PC;
- I-phone.

**3.** A method, as per claim 1 or 2, wherein the sending of the information sheet takes place in electronic format directly on the reading device (3).

**4.** A method, as per one or more of the preceding claims, wherein the decoding of the QR Code determines an electronic address that gives access via Internet directly to the information sheet loaded in the file (11) of the central server (10).
